# DEMANDE DE BREVET EUROPEEN

(11) **EP 0 982 679 A1**
(43) Date de publication de la demande: **01.03.2000**
(21) Numéro de dépôt: 99402103.8
(22) Date de dépôt: 23.08.1999
(51) Int. Cl.: G06K 13/08, G06K 7/00

(54) **Connecteur de lecteur de carte sim**

(30) Priorité: 28.08.1998 FR 9810835
(71) Demandeur: FRAMATOME CONNECTORS INTERNATIONAL, 92400 Courbevoie (FR)
(72) Inventeur: Bernardet, Jean-Baptiste, 25370 Les Hopitaux Vieux (FR)
(74) Mandataire: Somnier, Jean-Louis

(57) **Abrégé**

L'invention concerne un connecteur de lecteur de carte (1) comportant un cadre isolant (2) sur lequel sont agencés une pluralité de contacts électriques (4), un bras (6) de positionnement de la carte (1) dans le connecteur et d'éjection de celle-ci, dudit connecteur et des moyens de maintien de la carte (1) en position de lecture.

Selon l'invention, ledit bras (6) comporte une première extrémité (10) comportant un axe (12) autorisant la rotation dudit bras (6) et une deuxième extrémité (14) comportant un pion (16) qui se trouve en contact avec la carte (1) lors de l'introduction et de l'éjection de cette dernière respectivement dans le connecteur et lors de son éjection dudit connecteur.

## Description

La présente invention concerne un connecteur pour lecteur de carte du type SIM fonctionnant suivant la technologie à contact frottant. Les cartes de ce type comportent un dégagement formant un angle normalisé destiné à indiquer le sens d'introduction de la carte dans le connecteur.

L'invention concerne plus particulièrement un connecteur comportant un cadre isolant sur lequel sont agencés une pluralité de contacts électriques, un bras de positionnement et d'éjection de ladite carte dans le connecteur (respectivement du connecteur) ainsi qu'un moyen de maintien de ladite carte en position de lecture.

Dans les applications utilisant des cartes SIM de ce type, il est important d'avoir la certitude que la carte est correctement insérée et reste dans la position qui permet un fonctionnement nominal du microcircuit. En outre, afin de simplifier la fabrication et le fonctionnement du connecteur, il est désiré que le moyen de positionnement serve également de moyen d'éjection de la carte hors dudit connecteur.

Il est connu dans l'art antérieur, notamment par la demande de brevet allemande DE 195 21 360, un système qui permet d'immobiliser la carte dans la position désirée. Un tel système est constitué par un levier qui doit être poussé manuellement une fois la carte introduite dans le lecteur, cette dernière étant poussée jusque dans la position requise.

Ce système ne permet pas de maintenir avec certitude la carte dans une position de lecture optimale et n'est pas adapté pour réaliser l'éjection de la carte hors du connecteur.

Le but de l'invention est de réaliser un positionnement sûr de la carte SIM dans le connecteur et l'éjection de cette dernière dudit connecteur par une seule et même pièce.

Un autre but de l'invention est d'éviter les erreurs de manipulation en empêchant l'introduction de la carte dans le connecteur dans le mauvais sens.

Pour atteindre ces buts, le bras de positionnement et d'insertion équipant le connecteur selon l'invention est caractérisé en ce qu'il comporte une première extrémité comportant un axe autorisant la rotation dudit bras et une deuxième extrémité comportant un pion qui se trouve en contact avec la carte lors de l'introduction celle-ci dans le connecteur et lors de son éjection dudit connecteur.

Ainsi, grâce au mouvement de rotation du bras et grâce au contact permanent de la carte avec le pion, le positionnement, l'éjection et le maintien en position de lecture de la carte sont réalisés au moyen d'une seule et même pièce. Il en résulte une simplification notable de la structure du connecteur.

D'autres caractéristiques et avantages de l'invention ressortiront de la description qui va suivre, prise à titre d'exemple non limitatif, en référence aux figures annexées dans lesquelles:
- la figure 1 représente une vue en perspective d'un connecteur conforme à l'invention;
- la figure 2 représente une vue en perspective du connecteur de la figure 1 dans lequel on a introduit partiellement une carte SIM;
- la figure 3 représente une vue en perspective du connecteur de la figure 1 dans lequel on a introduit complètement une carte SIM.

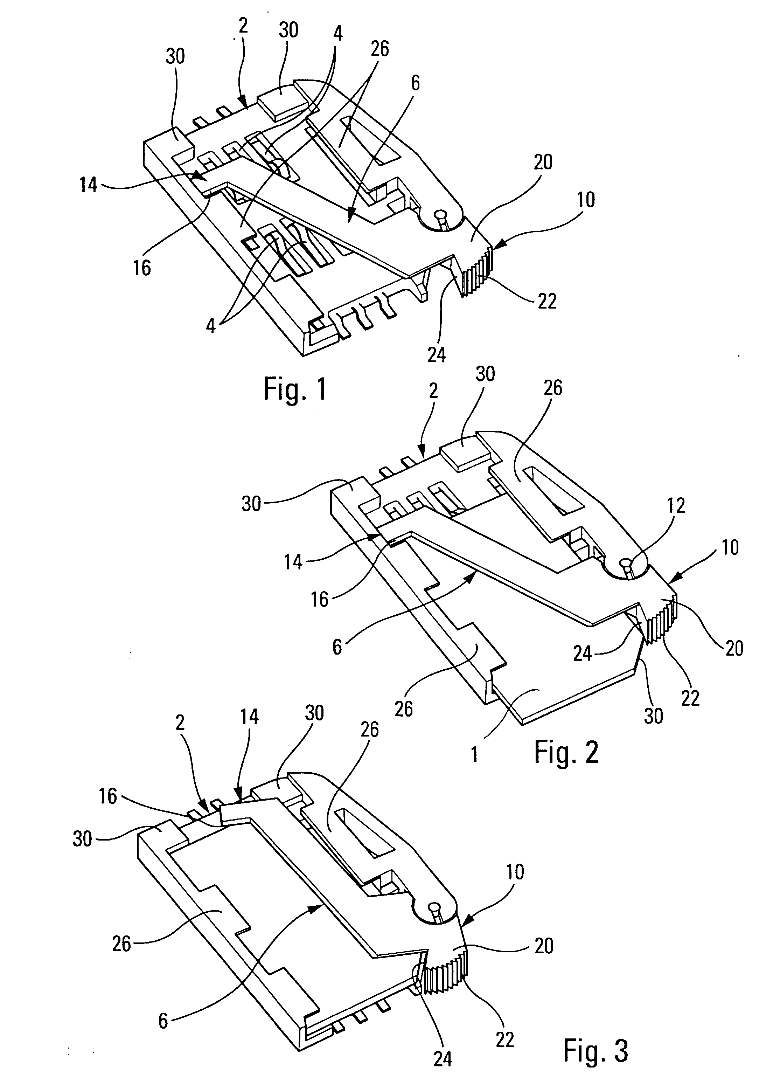

Les figures 1, 2 et 3 représentent une vue d'un connecteur de lecteur de carte 1 type SIM comportant un cadre isolant 2 sur lequel sont agencés une pluralité de contacts électriques 4, un bras 6 de positionnement de la carte 1 dans le connecteur et d'éjection de celle-ci dudit connecteur ainsi que des moyens de maintien de ladite carte 1 en position de lecture.

Comme on peut le voir sur ces figures 1, 2 et 3, qui illustrent un mode préféré de réalisation de l'invention, le bras 6 comporte une première extrémité 10 faisant saillie à l'extérieur du connecteur et comportant un axe 12 autorisant la rotation dudit bras 6 et une deuxième extrémité 14 s'étendant à l'intérieur dudit connecteur et comportant un pion 16 qui se trouve en contact avec la carte 1 lors de l'introduction de ladite carte dans le connecteur et lors de l'éjection de cette dernière dudit connecteur.

Selon ce mode de réalisation, le moyen 8 de maintien de la carte 1 dans le position de lecture est constitué par une pièce 20 solidaire du bras 6 et comportant une face extérieure 22 striée accessible à un opérateur pour manipuler le bras 6 et une face intérieure 24 portant une excroissance formant un angle pratiquement identique à l'angle normalisé obtenu par dégagement 30 pratiqué sur un coin de la carte 1. Ainsi, lors de l'introduction de la carte dans le connecteur, le bras 6 de positionnement tourne autour de l'axe 12 et l'excroissance de la face 24 s'insinue parfaitement dans l'angle normalisé de la carte 1. Lorsque la carte 1 atteint la position de lecture, ladite face intérieure 24 appuie sur le dégagement de la carte 1 pour la maintenir en position de lecture

Pour faciliter l'introduction de la carte dans le connecteur, ce dernier est muni de moyens de guidage 26 de la carte 1 agencés sur toute sa longueur. En outre, il est prévu dans le connecteur des moyens de butée 30 sur lesquels vient appuyer la carte 1 lorsqu'elle est en position de lecture. Cette position est indiquée par un signal (lumineux par exemple) émis par un détecteur de fin de course agencé dans le connecteur.

## Revendications

1. Connecteur de lecteur de carte du type SIM (1) comportant un cadre isolant (2) sur lequel sont agencés une pluralité de contacts électriques (4), un bras (6) de positionnement et d'éjection de la carte (1) dans le connecteur (respectivement du connecteur) et un moyen de maintien de la carte en position de lecture, caractérisé en ce que ledit bras (6) comporte une première extrémité (10) comportant un axe (12) autorisant la rotation dudit bras (6) et une deuxième extrémité (14) comportant un pion (16) qui se trouve en contact avec la carte (1) lors de l'introduction de cette dernière dans le connecteur et lors de son éjection dudit connecteur.

2. Connecteur selon la revendication 1, caractérisé en ce que lesdits moyens de maintien de la carte (1) dans la position de lecture sont constitués par une pièce (20) solidaire du bras (6) et comportant une face extérieure (22) accessible à un opérateur pour manipuler le bras (6) et une face intérieure (24) portant une excroissance formant un angle pratiquement identique à un angle normalisé obtenu par un dégagement (30) situé sur un coin de la carte (1) de telle sorte que, lors de l'introduction de cette dernière dans le connecteur, le bras (6) tourne autour de l'axe (12) et ladite excroissance s'insinue parfaitement dans l'angle normalisé (30) de la carte (1) et, lorsque la carte (1) atteint la position de lecture, ladite face intérieure (24) appuie sur ledit dégagement (30) pour maintenir la carte (1) en position de lecture.

3. Connecteur selon l'une des revendications 1 ou 2, caractérisé en ce qu'il comporte en outre des moyens (26) de guidage de la carte (1) et des moyens de butée (30) sur lesquels vient appuyer la carte (1) lorsqu'elle est en position de lecture.

4. Connecteur selon l'une des revendications 1 à 4, caractérisé en ce que ladite première extrémité (10) fait saillie à l'extérieur du connecteur tandis que ladite deuxième extrémité (14) s'étend à l'intérieur dudit connecteur.

5. Connecteur selon l'une des revendications 1 à 4, caractérisé en ce qu'il comporte un détecteur de fin de course de la carte lorsqu'elle a atteint la position de lecture.
